# EUROPEAN PATENT SPECIFICATION

(11) **EP 2 208 000 B1**
(45) Date of publication and mention of the grant of the patent: **19.09.2012**
(21) Application number: 08836284.3
(22) Date of filing: 06.10.2008
(51) Int. Cl.: F23G 7/00, F23G 5/30, F23G 5/02, F23G 7/10, F23C 5/08, F23G 7/12

(54) **METHOD AND APPARATUS FOR SIMULTANEOUS GASIFICATION OF ORGANIC MATERIALS AND RESIDUAL HUMUS MATERIALS OF STABILIZED MUNICIPAL AND INDUSTRIAL SEWAGE SLUDGES**
VERFAHREN UND VORRICHTUNG ZUR SIMULTANEN VERGASUNG ORGANISCHER MATERIALIEN UND RESTHUMUSMATERIALIEN AUS STABILISIERTEM STÄDTISCHEM UND INDUSTRIELLEM KLÄRSCHLAMM
MÉTHODE ET APPAREIL DE GAZÉIFICATION SIMULTANÉE DE MATÉRIAUX ORGANIQUES ET D'HUMUS RÉSIDUELS DE BOUES D'ÉGOUTS MUNICIPALES ET INDUSTRIELLES

(30) Priority: 05.10.2007 HU 0700651
(43) Date of publication of application: 21.07.2010
(73) Proprietor: Lo-ka Kft., 1054 Budapest (HU)
(72) Inventor: LOVAS, János Pál, H-3532 Miskolc (HU)
(74) Representative: Erdély, Péter
(86) International application number: PCT/HU2008/000115
(87) International publication number: WO 2009/044218

(56) References cited:
- WO-A1-94/17161
- WO-A2-02/29322
- US-A- 4 133 273
- US-A- 4 597 771

## Description

An object of the present invention is a process and an apparatus for the simultaneous gasification of organic materials and residual humus materials of stabilized municipal and industrial sewage sludge.

Up to now, long term natural stabilization of sludge could be achieved only in voluminous artificial landfills of rather indefinite capacity. This, however, requires a long period of time and goes with a serious load of environment. Further to the sludge, there is a rather big quantity of residual humus materials as well, originating from agricultural production. The environmental load provided by these materials is, further to the unpleasant odor, the infiltration of dangerous materials (such as nitrates, germs, gene-manipulated materials, pharmaceuticals and heavy metals) into the underground water sources. Furthermore, the methane discharged from these materials contributes considerably to the growth of the ozone hole.

Various methods have been developed over the years for the disposal of such materials. The methods of elimination differ from each other in the ways of processing, drying and converting the organic waste materials, mainly sewage sludge to heat energy. WO94/17161 discloses a process for simultaneous gasification of organic and residual humus material and industrial sewage sludge.

EP0950030 A1 discloses a method for treating sewage or similar organic sludge obtained from waste water treatment plants, wherein dewatered sludge cake and an alkaline admixture are mixed and then dried under pasteurization conditions utilizing heat from the exothermic reaction with the alkali. During drying, moisture is evaporated from the mixture by exothermic heat.

US 5,762,809 A1 discloses another method for chemical oxidative treatment of a medium containing organic constituents. Here, the medium is heated to a preset first low temperature range between 70 -110 °C in a first process step, and kept in this temperature range for a preset treatment duration, preferably at least for 10 minutes. In a second process step the medium is heated to apreset second low temperature range between 140 - 200 °C, at 300kPa-3000kPa pressure. The sludge is kept in this temperature and pressure range for a preset treatment duration, which is at least 10 minutes. In the course of this, an oxygen-containing gas is introduced into the medium at least intermittently. Between the first and second process steps or during the second process step, a predetermined amount of hydrogen peroxide is added to the medium.

There are methods, wherein electric power is obtained from biogas production and no attention is paid to the considerable amount of residual humus materials, the storage of which is strictly controlled by EU rules.

However, all these methods relate mainly or exclusively to the treatment of a single material or of small number of materials, are not efficient enough, and load the environment.

It is therefore the object of the present invention to provide a method, which is efficient, environmentally sound and appropriate for simultaneous gasification of different materials, such as fresh or stabilized sewage sludge stored in dumps or containers, organic materials allowed to be stored exclusively in wasteyards and digesters, and residual humus materials inoculated with food-producing spores.

The process according to the invention comprises the steps of mechanically dehydrating the stabilized sewage sludge; mixing agricultural waste material to the mechanically dehydrated sewage sludge and drying the mixture obtained; adding municipal waste material to said mixture in an amount of 30 - 35 %; homogenizing the mixture; continuously feeding the homogenized mixture under control into a pyrolysis furnace, and gasifying the mixture in the furnace.

According to a preferred embodiment, the dry material content of the mixture is held on range between 60 and 65 % and drying is carried out in a temperature range of 30 - 35 °C.

The agricultural waste material is residual humus or mushroom humus and the municipal waste material is selected household garbage, paper, cellulose or plastic. The particle size range of the municipal waste material is preferably 10 - 12 mm.

Energy source of the process may be solar heat or a fermentation system. The residual humus material obtained by the fermentation may be recycled and the pyrolysis product of the process may be used for producing hot water or electric power.

It is a further object of the invention to provide a pyrolysis furnace for carrying out the above process at low cost and in an efficient way.

There are gasification furnaces for the disposal of sewage sludge, as disclosed e.g. in JP2007056113 or JP2006112299, but these documents do not contain any hint for using the material to be eliminated as auxiliary fuel material in the furnaces.

The pyrolysis furnace according to the invention contains a housing provided with a fluid bed and means for injecting air and the material to be gasified as auxiliary fuel material, wherein said means for injecting air and auxiliary fuel material contains at least one swinging burner rotatable around horizontal axis and arranged at the upper part of the housing, around the periphery thereof.

In the furnace, there are three burners arranged preferably above the fluid bed in a height of 50 - 100 cm, wherein the angles between the injection axis of said burners are 120°, meanwhile the swinging range of the burners is ± 20°, with respect to a horizontal plane.

In a preferred embodiment of the invention, the burners are provided with control unit.

The process according to the invention may be applied for final disposal of sewage materials or for providing alternative energy (heat or electric power). Ash obtained as by-product of the method may be recovered and used for different purposes.

The process according to the invention may also be used for simultaneous gasification of properly prepared waste materials referred to above, in pyrolysis furnace, in a way that does not pollute underground water sources during storage.

As the amount of collected fluid organic waste materials is rather high, it is reasonable to carry out elimination in situ, where the sludge or other organic waste materials are produced. In this way, transportation does not increase the load of the environment, the danger of contamination is reduced and the efficiency of the method is increased. Dangerous waste materials obtained in food or other industries may be completely eliminated by several furnaces. If needed, e.g. in cases of handling yogurt sludge, meat waste, blood, food or kitchen waste, fermentors may also be applied. A great advantage of the method according to the invention is that it reduces the need for new dumplings and provides alternative bio-energy by reclaiming the existing ones.

The invention will be described more in details by way of examples, with reference to the attached drawing. In the drawing
- Figure 1.: shows the flowchart of the process according to the invention and
- Figure 2.: is the schematic cross section of the pyrolysis furnace according to the invention.

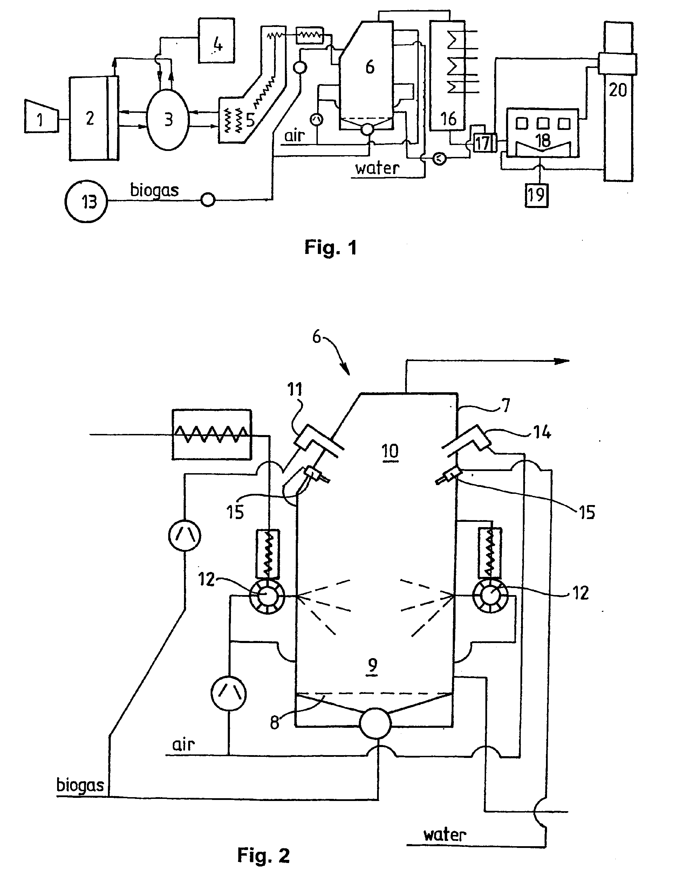

The flowchart in Fig.1 shows that, in the first step of the process according to the invention, the stabilized sewage sludge is mechanically dehydrated. The stabilized sewage sludge may be in this process fresh sludge or reclaimed sludge as well. Adjusting of the required dry material content may preferably be carried out on-site, following the (continuous) exploitation of the sludge. The dehydrator 1 applied in this step may be any known apparatus used for this purpose. Anyway, the use of a mobile device of special construction may be advantageous. Preferably, the dehydrator 1 is electric-hydraulic device with low energy consumption. The dry material content of the dehydrated material is held preferably between 2 and 5 %, but can be adjusted at the output up to 65 %.

Energy source of the first step, and preferably of all further steps, may be solar heat. The unit providing the solar heat may contain solar collector and solar cells. In this way, the solar unit provides both heat and electric power for the process.

Following the above first step, the mechanically primary dehydrated stabilized sewage sludge will be dried, which means that the stabilized, pre-treated sewage sludge of proper dry material content is fed into a closed dryer 2 in continuous action. The closed dryer 2 may be a drop pit lowered in the floor of a mill.

Further to the sludge, agricultural waste material is fed into the dryer 2. The agricultural waste material treated in the process according to the invention may be any waste material obtained as by-product of the agricultural industry and containing organic materials. In a preferred embodiment of the invention, the agricultural waste material is organic waste material, which contains cellulose. Such waste materials are e.g. residual humus or used mushroom humus.

The measures of the mill and the temperature of drying is established on basis of the amount of the sludge to be dried. A temperature of 32 - 39°C is enough for drying in drop pits, and this temperature may be provided with boilers providing heat for heat exchangers. During the drying process, the amount of released gases (such as ammonia) is minimal, due to the intensive oxidation resulted from injecting air into the drop pit and mixing of the sludge. Furthermore, due to the continuous oxygen input, released ammonia is quickly converted into nitrates, and in this way, the drying is odour free.

In the next step, selective collected municipal waste material is added to said mixture of sewage sludge and agricultural waste material. The selective collected municipal waste material (containing paper and plastic, except PVC type plastics, having a particle size of maximum 12 x 12 mm) is fed first into a container 3 operating in closed system. From this container 3, the material is added to the mixture of sewage sludge and agricultural waste material, in an amount of 30 - 35 %. Container 3 for the organic material is connected to an intermediate container 4, wherefrom additional mixture may be obtained for the continuous operation, if needed. Containers 3 and 4 are provided with control means for adjusting the amounts of materials (in accordance with the decree on waste materials No. EU 2006/12/EK).

The above outlined step is especially convenient for adjusting the caloric power of the mixture to be injected into the furnace. The caloric power of the sewage sludge and agricultural waste materials may vary in a wide range, meanwhile that of the selective collected municipal waste materials (paper, plastic) is confined to a relatively definite range and, in this way, it is possible to maintain the level of the caloric value of the mixture on a relatively constant value.

The mixture will than be homogenized in mixer 5, for obtaining uniform thermal properties. The daily obtained and homogenized municipal and industrial waste material may only enter the system after having been properly pre-treated. The way of the treatment depends on the contamination of the industrial sewage sludge.

The homogenized mixture prepared in the steps outlined above can be used as primary material for the pyrolysis. The fuel obtained by mixing sewage sludge, agricultural waste material and municipal waste material is continuously fed from the mixer 5 into the pyrolysis furnace 6, as auxiliary fuel material, containing pre-treated and homogenized solid organic waste materials in an amount of 30 - 35 %. After having been started by external energy source, the pyrolysis process is self-sustaining, due to the recirculation of the pyrolysis gas.

The pyrolysis furnace 6 shown in Fig.2 is actually a fluid bed device, wherein the fluid bed 8 arranged in the bottom of housing 7 provides for the gasification of the organic material as well as the heat needed for starting and maintaining of the pyrolysis process and for reheating the flue gas.

There is a gasification area 9 in the furnace, above the fluid bed 8, wherein gasification is carried out in the fluidized medium. In the upper part of the housing 7, there is an afterburning area 10, which is provided with air nozzles 11.

Between the fluid bed 8 and the afterburning area 10, three burners 12 are mounted on the housing 7, at about 80 cm above the fluid bed 8. The angles between the injection axis of said burners 12 are 120°, the swinging range thereof is ± 20°, with respect to a horizontal plane. The burners can operate together or independently from each other, depending on the amount of the auxiliary fuel and the so-called shock temperature (800 - 850) (°C) in the afterburning area 10. The amount of the auxiliary fuel added to the burners 12 further to the air is always calculated on basis of the parameters of the afterburning area 10. Therefore, the burners 12 are provided with control units (not shown in Fig.2).

The pyrolysis process itself is self-supporting, due to the presence of the pyrolysis gas. The temperature of the pyrolysis is relatively law (about 600 °C). In this embodiment biogas is used for starting the pyrolysis and for afterburning, but it is obvious for those skilled in the art, the any other gas, e. g. natural gas may also be used. After having been started, the process is self-supporting, due to the recirculation of the pyrolysis gas.

This seff-supporting pyrolysis process in the lower part of the housing 7 provides for the gasification and afterburning in the furnace 6. The auxiliary fuel and the air injected from the burners 12 collide with the particles gasificated in the fluid bed 8, transfer their kinetic energy and increase thereby the intensity of the gasification. The heat released during the collision of the auxiliary fuel and the air with the gasificated particles promotes reaching the afterburning temperature and increases the efficiency of the pyrolysis furnace 6.

The water containing materials (bio-mass, sludge etc.) obtained during gasification are continuously converted to bio-gas, which is stored in a tank 13 and returned to the furnace 6 through nozzles 14. This bio-gas, added to the pyrolysis gas produced in the furnace guarantees complete afterburning.

As a result of the construction of the furnace and the process according to the invention a uniform surface load may be achieved in the whole cross section of the furnace, which in turn results in balanced operation and an increase in output, up to 1,5 t/our. Due to the control of mass flow and improved heat distribution, uniform afterburning temperature of about 750 °C can be reached throughout in the furnace. Optionally, this can be further improved by injecting bio-gas and spraying water into the furnace, by nozzles 14. In this way, 840 - 850 °C temperature can be reached. The exhausted flue gas of about 850 °C temperature can be used for producing alternative energy.

In some cases, the power used for gasification and maintaining the whole burning process can be obtained from bio-gas coming from the fermentor and the storage tank 13, and there is no need of applying outer source of energy.

The system according to the invention may be provided with means for producing bio-gas, which is used as fuel in the pyrolysis or afterburning. The residual humus like organic material may be recycled into the main process, together with the agricultural waste material, and therefore no dangerous waste material is produced in this step, unlike to other fermentation processes.

The heat of the high temperature flue gas produced continuously in the pyrolysis offers reliable alternative energy, which may be used in a heat exchanger 16, such as shown in Fig 1. The heat exchanger may be a multi stage heat exchanger provided with catalyst 17 as control means. As the flue gas may contain solid particles, this solid component will be separated in separator 18. The separated ash is collected in a container 19, and may be recovered as raw material for the building industry. The polluting components of the flue gas are separated by absorption and, accordingly, an absorber off gas of an emission rate below the emission value limits is released through chimney 20.

It is advantageous, if the units of the system according to the invention are arranged in close vicinity of each other, in order to keep the load of the environment as low as possible.

The apparatus and the process according to the invention offer an efficient and environmentally sound way of simultaneous gasification of organic materials and residual humus materials of stabilized municipal and industrial sewage sludge. The process is simple, efficient and produces useful heat energy.

## Claims

1. Process for the simultaneous gasification of organic materials and residual humus materials of stabilized municipal and industrial sewage sludge, **characterized in that** it comprises the steps of
• mechanically dehydrating the stabilized sewage sludge;
• mixing agricultural waste material to the mechanically dehydrated sewage sludge and drying the mixture obtained;
• adding municipal waste material to said mixture in an amount of 30 - 35 %;
• homogenizing the mixture;
• continuously feeding the homogenized mixture under control into a pyrolysis furnace, and
• gasifying the mixture in the furnace.

2. The process according to claim 1, **characterized in that** the dry material content of the mixture is held between 60 and 65 %.

3. The process according to claim 1 or 2, **characterized in that** drying is carried out in a temperature range of 30 - 35 °C.

4. The process according to any of claims 1 to 3, **characterized in that** said agricultural waste material is residual humus or mushroom humus.

5. The process according to any of claims 1 to 4, **characterized in that** said municipal waste material is selected household garbage, paper, cellulose or plastic.

6. The process according to claim 5, **characterized in that** the particle-size range of the municipal waste material is 10 - 12 mm.

7. The process according to any of claims 1 to 6, **characterized in that** solar heat is applied as energy source.

8. The process according to any of claims 1 to 6, **characterized in that** fermentation system is applied as energy source.

9. The process according to claim 8, **characterized in that** the residual humus material obtained by the fermentation is recycled.

10. The process according to any of claims 1 to 9, **characterized in that** the pyrolysis product is used for producing hot water or electricity.

## Patentansprüche

1. Verfahren zur gleichzeitigen Vergasung von organischen Stoffen und des restlichen Humusmaterials von stabilisierten kommunalen und industriellen Abwasserschlämmen, **dadurch gekennzeichnet, dass** es die folgenden Schritte enthält:
- mechanische Dehydratation des stabilisierten Abwasserschlammes;
- Zumischung von landwirtschaflichem Abfallmaterial zum mechanisch dehydrierten Abwasserschlamm und Trocknung des erhaltenen Gemisches;
- Zugabe von kommunalem Abfallmaterial in einer Menge von 30 bis 35% zum Gemisch;
- Homogenisierung des Gemisches;
- kontinuierliche Einspeisung des homogenisierten Gemisches in geregelter Weise in einen Pyrolyseofen und
- Vergasung des Gemisches im Ofen.

2. Verfahren nach Anspruch 1, **dadurch gekennzeichnet, dass** der Trockenmaterialgehalt des Gemisches zwischen 60 und 65 % eingestellt wird.

3. Verfahren nach Anspruch 1 oder 2, **dadurch gekennzeichnet, dass** die Trocknung in einem Temperaturbereich von 30 bis 35 °C durchgeführt wird.

4. Verfahren nach einem der Ansprüche 1 bis 3, **dadurch gekennzeichnet, dass** als landwirtschafliches Abfallmaterial verbrauchtes Humusmaterial oder Pilzhumus verwendet wird.

5. Verfahren nach einem der Ansprüche 1 bis 4, **dadurch gekennzeichnet, dass** das kommunale Abfallmaterial aus selektiertem Haushaltsmüll, Papier, Zellulose oder Plaste besteht.

6. Verfahren nach Anspruch 5, **dadurch gekennzeichnet, dass** die Korngröße des kommunalen Abfallmaterials 10 bis 12 mm beträgt.

7. Verfahren nach einem der Ansprüche 1 bis 6, **dadurch gekennzeichnet, dass** als Energiequelle Solarwärme verwendet wird.

8. Verfahren nach Anspruch 8, **dadurch gekennzeichnet, dass** als Energiequelle ein Fermentationssystem verwendet wird.

9. Verfahren nach einem der Ansprüche 1 bis 8, **dadurch gekennzeichnet, dass** das während der Fermentation entstehende restliche Humusmaterial wiederverwendet wird.

10. Verfahren nach einem der Ansprüche 1 bis 9, **dadurch gekennzeichnet, dass** das Pyrolyseprodukt zur Herstellung von Warmwasser und elektrischem Strom verwendet wird.

## Revendications

1. Procédé pour la gazéification simultanée des matières organiques et de l'humus résiduaire des boues stabilisées des eaux usées communales et industrielles, **caractérisé en ce que** le procédé comprend les étapes suivantes:
- déshydratation mécanique de la boue stabilisée des eaux usées;
- mélange du déchet agricole à la boue stabilisée des eaux usées mécaniquement déshydratée et séchage du mélange ainsi obtenu;
- addition du déchet communal à ce mélange en une quantité de 30 à 35%;
- homogénéisation du mélange;
- alimentation continue du mélange homogénéisé de façon régulière dans un four à pyrolyse; et
- gazéification du mélange dans le four.

2. Procédé selon la revendication 1, **caractérisé en ce que** la teneur en matière sèche est tenue dans une zone entre 60 et 65 %.

3. Procédé selon la revendication 1 ou 2, **caractérisé en ce que** le séchage est executé dans une zone de température de 30 à 35 °C.

4. Procédé selon une des revendications 1 à 3, **caractérisé en ce que** le déchet agricole consiste en humus résiduaire ou en humus champignon.

5. Procédé selon une des revendications 1 à 4, **caractérisé en ce que** le déchet communal se compose des ordures ménagères, de papier, de cellulose ou de matière plastique.

6. Procédé selon la revendication 5, **caractérisé en ce que** la grosseur des grains du déchet communal se trouve dans une zone de 10 à 12 mm.

7. Procédé selon une des revendications 1 à 6, **caractérisé en ce que** la chaleur solaire est adaptée comme source d'énergie.

8. Procédé selon une des revendications 1 à 6, **caractérisé en ce qu'**un système de fermentation est adapté comme source d'énergie.

9. Procédé selon la revendication 8, **caractérisé en ce que** l'humus résiduaire obtenu par la fermentation est recyclé.

10. Procédé selon une des revendications 1 à 9, **caractérisé en ce que** le produit de pyrolyse est utilisé pour la production de l'eau chaude ou de l'électricité.
